# EUROPÄISCHE PATENTANMELDUNG

(11) **EP 2 781 301 A1**
(43) Veröffentlichungstag der Anmeldung: **24.09.2014**
(21) Anmeldenummer: 13183204.0
(22) Anmeldetag: 05.09.2013
(51) Int. Cl.: B23Q 1/76

(54) **Vorrichtung zur Werkstückzentrierung**

(30) Priorität: 20.03.2013 EP 13001443
(71) Anmelder: Rollomatic S.A., 2525 Le Landeron (CH)
(72) Erfinder: Pahud, Pierre Pr. Dr., CH-2520 La Neuveville (CH); Krumm, Christian, CH-2607 Cortébert (CH)
(74) Vertreter: Geitz Truckenmüller Lucht

(57) **Zusammenfassung**

Es wird eine Vorrichtung zur Werkstückzentrierung eines an einer Spindel (1) fixierten länglichen Werkstücks (2) vorgeschlagen mit einem ersten Stützelement (9, 45, 71, 91, 111), welches das Werkstück (2) oder ein das Werkstück (2) aufnehmendes Werkstückaufnahmeteil (60) abstützt, mit einem zweiten Stützelement (10, 46, 72, 92, 112), welches das Werkstück (2) oder ein das Werkstück (2) aufnehmendes Werkstückaufnahmeteil (60) abstützt, wobei das erste Stützelement (9, 45, 71, 91, 111) und das zweite Stützelement (10, 46, 72, 92, 112) gemeinsam eine Abstützung für das Werkstück (2) oder ein das Werkstück (2) aufnehmendes Werkstückaufnahmeteil (60) bilden, mit einem das erste Stützelement (9, 45, 71, 91, 111) und das zweite Stützelement (10, 46, 72, 92, 112) abstützenden Stützelementhaltekörper (11, 47, 73, 103), wobei das erste Stützelement (9, 45, 71, 91, 111) und das zweite Stützelement (10, 46, 72, 92, 112) verschiebbar und drehbar an dem Stützelementhaltekörper (11, 47, 73, 103) angeordnet sind.

## Beschreibung

Die Erfindung geht aus von einer Vorrichtung zur Werkstückzentrierung eines an einer Spindel angeordneten Werkstücks.

Werkzeugmaschinen sind im allgemeinen mit einer Spindel ausgestattet, an der ein zu bearbeitendes, meist zylindrisches Werkstück angeordnet wird. Die Anordnung des Werkstücks erfolgt in einer Werkstückschnittstelle der Spindel. An der Werkstückschnittstelle wird das Werkstück eingespannt. Zur Bearbeitung des Werkstücks mit einem Werkzeug wird das Werkstück durch die Spindel rotiert. Zu einer derartigen Bearbeitung zählt beispielsweise eine spanende Präzisionsbearbeitung oder Schleifen. Um ein Bearbeitung des Werkstücks mit hoher Genauigkeit zu ermöglichen, muss das Werkstück relativ zur Spindel zentriert werden. Dabei werden die Rotationsachse der Spindel und die Längsachse des Werkstücks zur Deckung gebracht. Hierdurch wird eine Unwucht oder eine Taumelbewegung des Werkstücks beim Rotieren vermieden. Die Werkstückschnittstelle muss eine hohe Wiederhohlgenauigkeit beim Zentrieren aufweisen. Dies bedeutet, dass beim Wechseln eines Werkstücks stets die gleiche hohe Genauigkeit beim Zentrieren erreicht wird. Hierzu werden Vorrichtungen zum Spannen und zur Werkstückzentrierung eingesetzt.

Zum Abstützen langer Werkstücke beim Drehen sind Lünetten bekannt, die im Englischen Sprachgebrauch als Steady Rests bezeichnet werden. Diese weisen drei oder mehr Auflagen auf, die bezogen auf die Drehachse der Spindel in radialer Richtung auf das Werkstück eine Kraft ausüben und von verschiedenen Seiten an dem Werkstück angreifen, insbesondere von unten, oben und den Seiten. Sie sind bevorzugt in gleichen Winkelabständen über einen Vollkreis verteilt, wobei sich das Werkstück im Zentrum des Vollkreises befindet. Dabei ist der Vollkreis Teil einer zur Drehachse der Spindel senkrechten Ebene. Die Position der Verschleißauflagen ist einstellbar.

Darüber hinaus sind zur Werkstückzentrierung Auflagen bekannt, die als Halbmond oder V-Block bezeichnet werden. Sie weisen eine Vertiefung auf, die sich in einer Längsrichtung erstreckt. Die Vertiefung ist nach einer Seite offen und im Querschnitt halbkreisförmig oder dreieckig. Das Werkstück liegt im Bereich der Vertiefung an der Auflage an und wird durch diese positioniert.

Um das Werkstück relativ zur Rotationsachse der Spindel zu zentrieren, werden die bekannten Vorrichtungen senkrecht zur Rotationsachse der Spindel bewegt, und zwar in Richtung einer x-Achse und einer dazu senkrechten y-Achse. x- und y-Achse sind dabei senkrecht zur Rotationsachse der Spindel. Darüber hinaus können die Vorrichtungen in der Regel parallel zur Rotationsachse der Spindel verschoben werden. Dies entspricht einer Bewegung in Richtung einer z-Achse, welche sowohl zu der x-Achse als auch zu der y-Achse senkrecht ist.

Als nachteilig erweist sich dabei, dass mit den bekannten Vorrichtungen zwar eine Auflage für das Werkstück senkrecht zur Rotationsachse der Spindel bewegt und ein Versatz des Werkstücks parallel zur Rotationsachse der Spindel kompensiert werden kann. Es ist jedoch nicht möglich, gleichzeitig die Orientierung der Auflage relativ zur Rotationsachse der Spindel zu ändern.

Der Erfindung liegt die Aufgabe zugrunde, eine Vorrichtung zur Werkstückzentrierung zur Verfügung zu stellen, die eine verbesserte Einstellung der Position von Werkstücken relativ zu einer Rotationsachse der Spindel mit hoher Wiederholgenauigkeit ermöglicht, wobei nicht nur eine Parallelverschiebung in zueinander senkrechte Richtungen stattfinden soll sondern auch ein Verkippen einer Aufnahme für das Werkstück.

Diese Aufgabe wird durch eine Vorrichtung mit den Merkmalen des Anspruchs 1 gelöst. Die Vorrichtung weist ein erstes Stützelement, ein zweites Stützelement und einen die beiden Stützelemente abstützenden Stützelementhaltekörper auf. Das erste Stützelement und das zweite Stützelement bilden gemeinsam eine Auflage für das Werkstück oder für ein das Werkstück aufnehmendes zusätzliches Werkstückaufnahmeteil.

Jedes der beiden Stützelemente weist eine Werkstückanlegefläche auf. Das Werkstück berührt die beiden Stützelemente an diesen Werkstückanlegeflächen. Ist ein zusätzliches Werkstückaufnahmeteil vorgesehen, so berührt das Werkstückaufnahmeteil die beiden Stützelemente an deren Werkstückanlegeflächen. In diesem Fall berührt das Werkstück die Stützelemente nicht direkt.

Die beiden Stützelemente stützen das Werkstück in verschiedene Richtungen ab, so dass das Werkstück oder ein zusätzliches Werkstückaufnahmeteil beim Anliegen an den Stützelementen von mehreren Seiten gestützt und seine Position in radialer Richtung bezogen auf die Spindelachse definiert wird.

Das erste und zweite Stützelement können symmetrisch zu einer vertikalen Symmetrieebene angeordnet sein.

Die Vorrichtung weist einen das erste und zweite Stützelement abstützenden Stützelementhaltekörper auf, der bevorzugt entlang einer Bewegungsachse verschiebbar angeordnet ist. Die Anordnung der Vorrichtung erfolgt dabei vorteilhafterweise derart, dass die Bewegungsachse im wesentlichen parallel zur Rotationsachse der Spindel ist. Rotationsachse der Spindel und Bewegungsachse sind dabei beispielsweise Teil einer gemeinsamen vertikalen Ebene.

Das erste und das zweite Stützelement sind verschiebbar und drehbar an dem Stützelementhaltekörper angeordnet. Sie sind unabhängig voneinander. Ihre Positionen sind unabhängig voneinander einstellbar. Die erste Richtung, in die das erste Stützelement verschiebbar ist, und die zweite Richtung, in die das zweite Stützelement verschiebbar ist, spannen zwei Geraden auf, die sich unter einem Winkel von mehr als 0° und weniger als 180° schneiden. Besonders bevorzugt schneiden sie sich unter einem Winkel von 90°.

Bevorzugt verlaufen die beiden Geraden, die die Verschieberichtung des ersten und zweiten Stützelements wiedergeben, in einer Ebene, die senkrecht zur Bewegungsachse des Stützelementhaltekörpers ist.

Das erste Stützelement ist um eine erste Achse drehbar. Diese verläuft bevorzugt senkrecht zu der Richtung, in die das erste Stützelement verschiebbar ist.

Das zweite Stützelement ist um eine zweite Achse drehbar. Diese verläuft bevorzugt senkrecht zu der Richtung, in die das zweite Stützelement verschiebbar ist.

Auf diese Weise kann nicht nur die Position eines Werkstücks im Bezug auf eine zur Rotationsachse der Spindel senkrechte x- und y-Achse eingestellt werden. Die Drehung der Stützelemente ermöglicht auch die Einstellung zweier Winkel und damit das Drehen oder Verkippen des Werkstücks und der Längsachse des Werkstücks, um das Werkstück relativ zu der Rotationsachse der Spindel auszurichten.

Nach einer vorteilhaften Ausgestaltung der Erfindung weist das erste Stützelement eine im wesentlichen ebene erste Werkstückanlegefläche und das zweite Stützelement eine im wesentlichen ebene zweite Werkstückanlegefläche auf. Der Winkel zwischen der ersten Werkstückanlegefläche und der zweiten Werkstückanlegefläche ist größer als 0° und kleiner als 180°. Die erste Stützelementauflagefläche kann eine durchgängige Fläche sein oder sich aus mehreren Flächenteilen zusammensetzen. Entsprechendes gilt für die zweite Stützelementauflagefläche. Das Werkstück liegt an der ersten und zweiten Werkstückanlegefläche an. Es berührt das erste und zweite Stützelement an der ersten und zweiten Werkstückanlegefläche. Bevorzugt ist der Winkel zwischen der ersten und zweiten Werkstückanlegefläche größer als 60° und kleiner als 120°. Besonders bevorzugt beträgt der Winkel im wesentlichen 90°.

Nach einer weiteren vorteilhaften Ausgestaltung der Erfindung ist der Stützelementhaltekörper entlang einer Bewegungsachse verschiebbar angeordnet. Die Bewegungsachse ist dabei im wesentlichen parallel zur Rotationsachse der Spindel.

Nach einer weiteren vorteilhaften Ausgestaltung der Erfindung weist der abstützende Körper eine erste Führung für das erste Stützelement auf. An dieser ersten Führung ist das erste Stützelement in eine erste Richtung verschiebbar. Diese erste Richtung entspricht der oben genannten ersten Richtung, die durch eine erste Gerade vorgegeben ist. Die erste Richtung verläuft bevorzugt in einer zu der Bewegungsachse des Stützelementhaltekörpers senkrechten Ebene.

Nach einer vorteilhaften Ausgestaltung der Erfindung weist der abstützende Körper eine zweite Führung für das zweite Stützelement auf. An dieser zweiten Führung ist das zweite Stützelement in eine zweite Richtung verschiebbar. Diese zweite Richtung entspricht der oben genannten zweiten Richtung, die durch eine zweite Gerade vorgegeben ist. Die zweite Richtung verläuft bevorzugt in einer zu der Bewegungsachse des Stützelementhaltekörpers senkrechten Ebene. Der Winkel zwischen der ersten Führung und der zweiten Führung, insbesondere zwischen der ersten Richtung und der zweiten Richtung beträgt mehr als 0° und weniger als 180°. Bevorzugt beträgt der Winkel zwischen 60° und 120°. Besonders bevorzugt beträgt der Winkel im wesentlichen 90°.

Nach einer weiteren vorteilhaften Ausgestaltung der Erfindung verläuft die erste Richtung entlang einer ersten Geraden und die zweite Richtung entlang einer zweiten Geraden. Dabei sind die erste und die zweite Gerade Teil einer Ebene, die senkrecht zu der Bewegungsachse des Stützelementhaltekörpers ist.

Nach einer weiteren vorteilhaften Ausgestaltung der Erfindung ist die erste Führung und/ oder die zweite Führung als schiefe Ebene an dem Stützelementhaltekörper ausgebildet. An dieser bewegt sich das erste und/ oder zweite Stützelement oder ein zusätzliches Bauteil, welches das erste und/ oder zweite Stützelement trägt, entlang. Diese Translationsbewegung erfolgt im wesentlichen die schiefe Ebene hinauf oder hinunter.

Nach einer weiteren vorteilhaften Ausgestaltung der Erfindung ist das erste Stützelement um eine erste Drehachse drehbar. Dabei ist die erste Drehachse im wesentlichen senkrecht zu der ersten Führung des ersten Stützelements. Die erste Drehachse ist im wesentlichen senkrecht zu der ersten Richtung, entlang der das erste Stützelement an der ersten Führung verschiebbar ist.

Nach einer weiteren vorteilhaften Ausgestaltung der Erfindung ist das zweite Stützelement um eine zweite Drehachse drehbar. Dabei ist die zweite Drehachse im wesentlichen senkrecht zu der zweiten Führung des zweiten Stützelements. Die zweite Drehachse ist im wesentlichen senkrecht zu der zweiten Richtung, entlang der das zweite Stützelement an der zweiten Führung verschiebbar ist. Die erste und zweite Drehachse verlaufen bevorzugt in einer Ebene und schneiden sich unter einem Winkel. Dieser entspricht beispielsweise dem Winkel, unter dem sich die erste und die zweite Führung insbesondere die Richtungen der ersten und zweiten Führung schneiden. Die Ebene ist bevorzugt senkrecht zu der Bewegungsachse des abstützenden Körpers.

Nach einer weiteren vorteilhaften Ausgestaltung der Erfindung ist ein erster Schlitten vorgesehen, der an der ersten Führung verschiebbar angeordnet ist. Das erste Stützelement ist gegenüber dem ersten Schlitten drehbar. Eine Bewegung des ersten Schlittens entlang der ersten Führung führt zu einer linearen Bewegung des ersten Stützelements.

Nach einer weiteren vorteilhaften Ausgestaltung der Erfindung ist ein zweiter Schlitten vorgesehen, der an der zweiten Führung verschiebbar angeordnet ist. Das zweite Stützelement ist gegenüber dem zweiten Schlitten drehbar. Eine Bewegung des zweiten Schlittens entlang der zweiten Führung führt zu einer linearen Bewegung des zweiten Stützelements.

Nach einer weiteren vorteilhaften Ausgestaltung der Erfindung ist das erste Stützelement zumindest abschnittsweise als Schlitten ausgebildet, der entlang der ersten Führung verschiebbar angeordnet ist.

Nach einer weiteren vorteilhaften Ausgestaltung der Erfindung ist das zweite Stützelement zumindest abschnittsweise als Schlitten ausgebildet, der entlang der zweiten Führung verschiebbar angeordnet ist.

Nach einer weiteren vorteilhaften Ausgestaltung der Erfindung ist mindestens eine der beiden Führungen an einem Ende mit einer Führungsbegrenzung ausgestattet. An der Führungsbegrenzung ist eine Feder angeordnet. Der an der Führung angeordnete Schlitten stützt sich mittelbar oder unmittelbar an der Feder ab. Wird der Schlitten ausgehend von einer Ausgangsposition, bei der die Feder nicht ausgelenkt ist, entlang der Führung bewegt, so wird die Feder ausgelenkt. Die ausgelenkte Feder übt auf den Schlitten eine Kraft aus, die parallel zur Führung wirkt. Sie drängt den Schlitten zurück in seine Ausgangsstellung. Bei der Feder kann es sich beispielsweise um eine Schraubenfeder handeln. Anstelle einer mechanischen Feder kann auch eine pneumatische Feder oder ein pneumatischer Antrieb vorgesehen sein.

Nach einer weiteren vorteilhaften Ausgestaltung der Erfindung weist mindestens eines der beiden Stützelemente einen Absatz auf, mit dem es sich an dem ihm zugeordneten Schlitten an der der Führungsbegrenzung abgewandten Stirnseite abstützt.

Nach einer weiteren vorteilhaften Ausgestaltung der Erfindung ist der abstützende Körper mit mindestens einer Fixiereinrichtung ausgestattet. Mit der Fixiereinrichtung kann eine Position mindestens eines der beiden Stützelemente an dem Stützelementhaltekörper arretiert oder fixiert werden. Es kann beispielsweise eine erste Fixiereinrichtung für das erste Stützelement und eine zweite Fixiereinrichtung für das zweite Stützelement vorgesehen sein.

Nach einer weiteren vorteilhaften Ausgestaltung der Erfindung ist die Fixiereinrichtung eine Klemmeinrichtung. Diese drückt das Stützelement in der fixierten Stellung gegen den abstützenden Körper und verspannt ihn mit diesem.

Nach einer weiteren vorteilhaften Ausgestaltung der Erfindung ist der Stützelementhaltekörper spiegelsymmetrisch zu einer vertikalen Symmetrieebene. Die Bewegungsachse des abstützenden Körpers verläuft in der Symmetrieebene oder ist parallel zu der Symmetrieebene.

Nach einer weiteren vorteilhaften Ausgestaltung der Erfindung weist die Vorrichtung ein Werkstückpresselement auf, welches auf ein an dem ersten und zweiten Stützelement anliegendes Werkstück eine Kraft ausübt. Dieses Werkstückpresselement drückt ein Werkstück gegen das erste und zweite Stützelement. Das Werkstückpresselement kann auch als Clamping Finger bezeichnet werden.

Nach einer weiteren vorteilhaften Ausgestaltung der Erfindung ist die Vorrichtung mit einem Werkstückaufnahmeteil ausgestattet, welches an dem ersten und zweiten Stützelement anliegt. Das Werkstückaufnahmeteil weist eine Vertiefung für das Werkstück auf. Die Vertiefung ist dabei bevorzugt parallel zur Spindelachse ausgerichtet. Das Werkstückaufnahmeteil kann an den Stützelementen fixiert werden, beispielsweise mit der Fixiereinrichtung. Auf diese Weise bleibt die Position des Werkstückaufnahmeteils beim Austausch eines Werkstücks erhalten und muss nicht neu justiert werden. Weist das Werkstückaufnahmeteil im wesentlichen die Form eines halben Zylinders auf, so kann es auch als Half Moon bezeichnet werden.

Nach einer weiteren vorteilhaften Ausgestaltung der Erfindung verläuft die Vertiefung für das Werkstück in dem Werkstückaufnahmeteil im wesentlichen parallel zu einer Bewegungsachse des Stützelementhaltekörpers. Dabei ist der Stützelementhaltekörper entlang der Bewegungsachse verschiebbar.

Nach einer weiteren vorteilhaften Ausgestaltung der Erfindung weist die Fixiereinrichtung einen das Werkstückaufnahmeteil gegen das erste und/ oder zweite Stützelement drückenden Abschnitt auf. Auf diese Weise kann das Werkstückaufnahmeteil in einer Position fixiert werden.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung sind sechs Ausführungsbeispiele einer Vorrichtung zur Werkstückzentrierung dargestellt. Es zeigen:
- Figur 1: Spindel mit Werkstück und mehreren Vorrichtungen zur Werkstückzentrierung in einer Seitenansicht,
- Figur 2: erstes Ausführungsbeispiel einer Vorrichtung zur Werkstückzentrierung in perspektivischer Ansicht,
- Figur 3: Vorrichtung zur Werkstückzentrierung gemäß Figur 2 in Schnittdarstellung,
- Figur 4: Vorrichtung gemäß Figur 2 in Explosionsdarstellung,
- Figur 5: erstes Stützelement der Vorrichtung gemäß Figur 2 in perspektivischer Ansicht,
- Figur 6: Vorrichtung gemäß Figur 2 mit Werkstück,
- Figur 7: zweites Ausführungsbeispiel einer Vorrichtung zur Werkstückzentrierung, Ansicht von vorne,
- Figur 8: Vorrichtung zur Werkstückzentrierung gemäß Figur 7 in perspektivischer Ansicht,
- Figur 9: drittes Ausführungsbeispiel einer Vorrichtung zur Werkstückzentrierung in einer perspektivischen Ansicht,
- Figur 10: Vorrichtung zur Werkstückzentrierung gemäß Figur 9 in Schnittdarstellung,
- Figur 11: Vorrichtung zur Werkstückzentrierung gemäß Figur 9 in Explosionsdarstellung,
- Figur 12: viertes Ausführungsbeispiel einer Vorrichtung zur Werkstückzentrierung in Explosionsdarstellung,
- Figur 13: fünftes Ausführungsbeispiel einer Vorrichtung zur Werkstückzentrierung in einer perspektivischen Ansicht,
- Figur 14: Vorrichtung zur Werkstückzentrierung gemäß Figur 13 in Schnittdarstellung,
- Figur 15: Vorrichtung zur Werkstückzentrierung gemäß Figur 13 in Explosionsdarstellung,
- Figur 16: sechstes Ausführungsbeispiel einer Vorrichtung zur Werkstückzentrierung in Explosionsdarstellung.

### Beschreibung der Ausführungsbeispiele

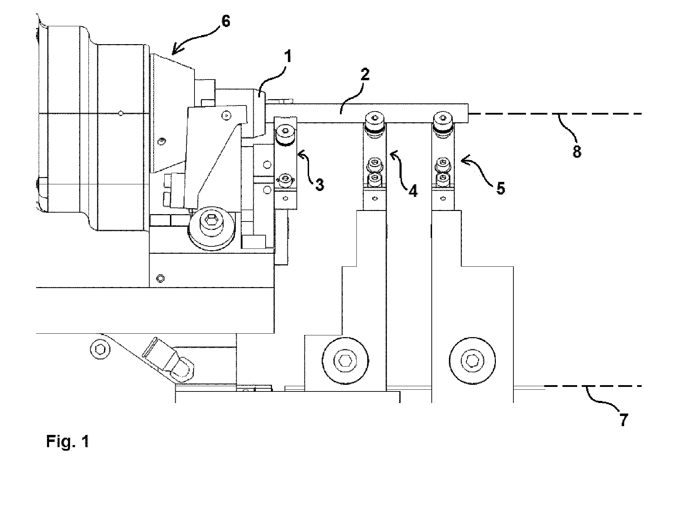

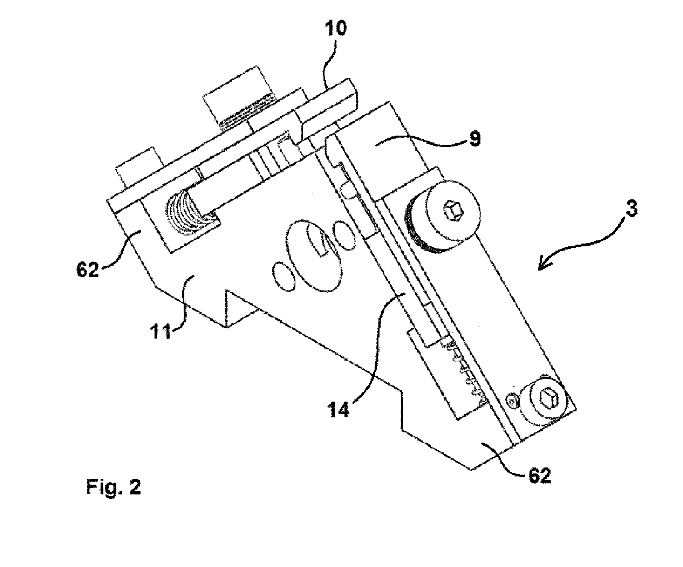

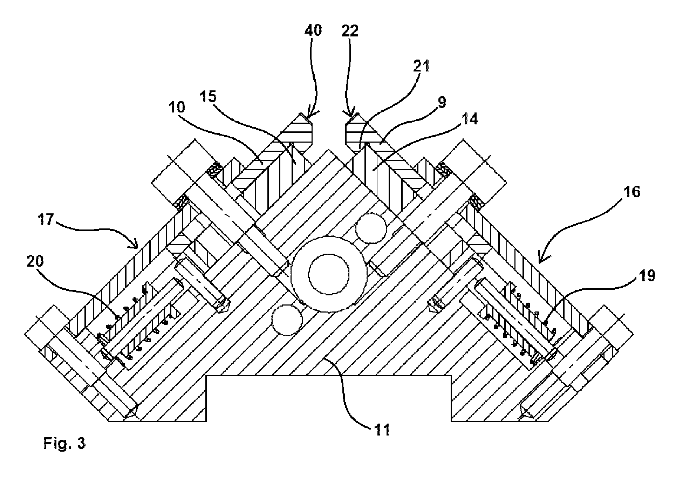

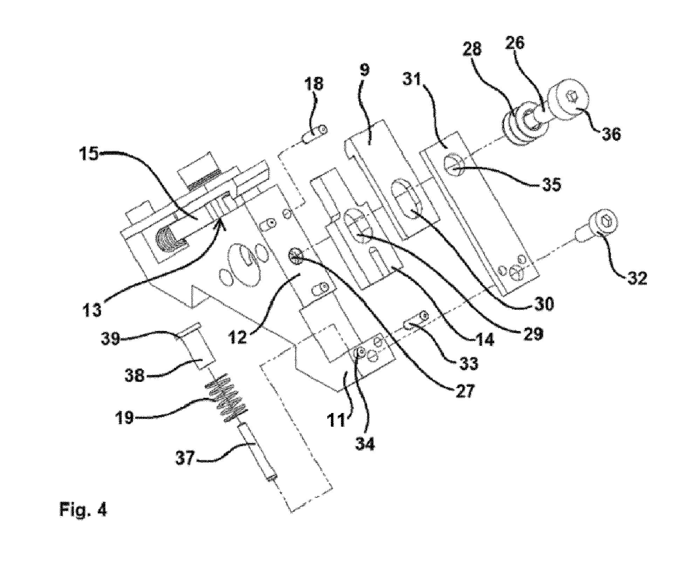

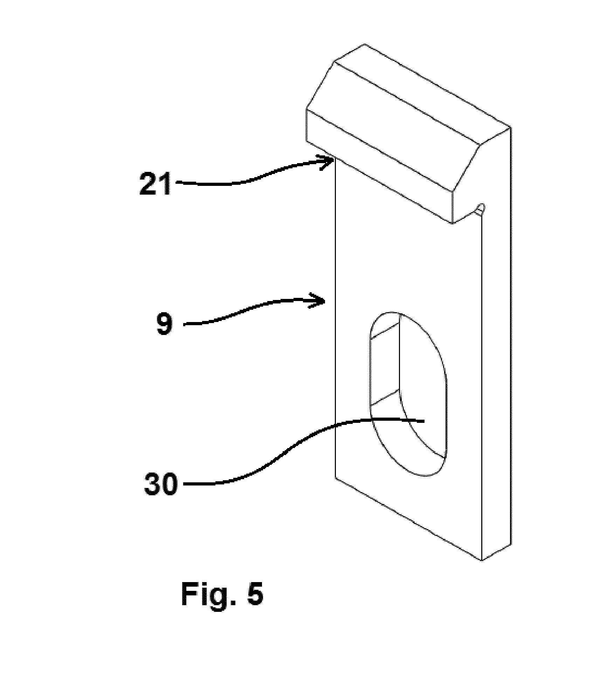

Figur 1 zeigt eine Spindel 1 mit einem Werkstück 2 und mehreren Vorrichtungen 3, 4, 5 zur Werkstückzentrierung. Die erste Vorrichtung 3 zur Werkstückzentrierung ist benachbart zu der Spanneinrichtung 6 der Spindel 1 angeordnet. Der Abstand zur Spindel ist nur in kleinen Umfang veränderbar. Die zweite Vorrichtung 4 und die dritte Vorrichtung 5 weisen einen größeren Abstand zu der Spanneinrichtung 6 auf. Sie sind entlang einer Bewegungsachse 7 verschiebbar. Alle drei Vorrichtungen 3, 4, 5 dienen dazu, die Längsachse des Werkstücks 2 mit der Rotationsachse 8 der Spindel 1 zur Deckung zu bringen. Die Bewegungsachse 7 ist im wesentlichen parallel zu der Rotationsachse 8 der Spindel. Die drei Vorrichtungen 3, 4 und 5 sind in den Figuren 2 bis 7 detaillierter dargestellt.

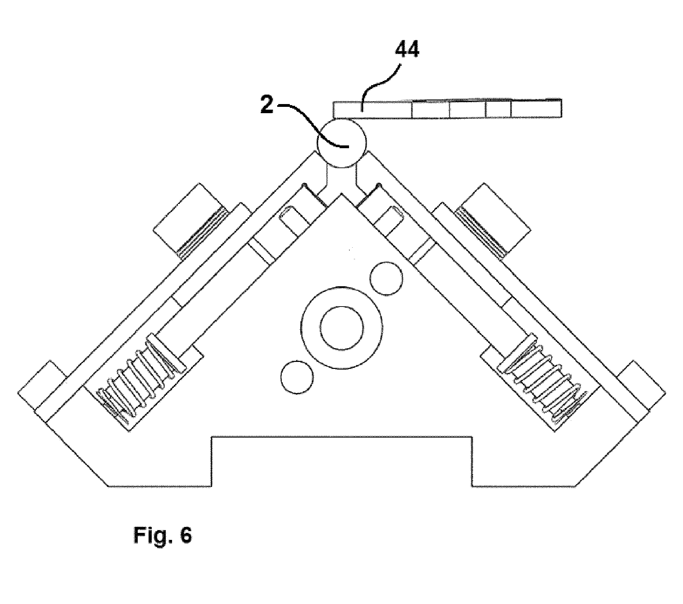

In den Figuren 2 bis 6 ist ein erstes Ausführungsbeispiel einer Vorrichtung 3 zur Zentrierung eines Werkstücks gezeigt. Das Werkstück ist in den Figuren 2 bis 5 nicht dargestellt. Es ist nur in Figur 6 erkennbar. Die Vorrichtung 3 weist ein erstes Stützelement 9, ein zweites Stützelement 10, einen die beiden Stützelemente 9, 10 abstützenden Stützelementhaltekörper 11 mit einer ersten Führung 12 und einer zweiten Führung 13, einem ersten Schlitten 14, einem zweiten Schlitten 15, einer ersten Fixiereinrichtung 16 und einer zweiten Fixiereinrichtung 17 auf. Zwei der Oberflächen des Stützelementhaltekörpers 11 sind als Führungen ausgebildet, und zwar als erste Führung 12 für den ersten Schlitten 14 und als zweite Führung 13 für den zweiten Schlitten 15. Die als Führungen ausgebildete Oberflächen des Stützelementhaltekörpers 11 sind ebene Flächen. Sie bilden jeweils eine schiefe Ebene, entlang der sich der erste Schlitten 14 und der zweite Schlitten 15 bewegen. Die auf der ersten und zweiten Führung aufliegende Oberfläche des ersten und zweiten Schlittens ist ebenfalls eine ebene Fläche. An den Führungen 12, 13 sind Führungsstifte 18 angeordnet. Sie sorgen für eine seitliche Führung der Schlitten 14, 15. Ein zentral angeordneter Stift begrenzt den Verschiebeweg der Schlitten 14, 15 an den Führungen 12, 13. Er sorgt ebenfalls für eine Führung. Die beiden Schlitten 14, 15 sind als flache Bauteile ausgebildet, die auf den Führungen 12, 13 nach oben und unten gleiten können. Sie können sich nur in eine Richtung vor und zurück bewegen.

Der Stützelementhaltekörper ist mit Führungsbegrenzungen 62 ausgestattet. Jeder Führung 12, 13 ist eine Führungsbegrenzung 62 zugeordnet. An jeder der beiden Führungsbegrenzungen 62 ist einer Feder 19, 20 angeordnet. Die Federn sind mit einem Stift 37 und einer Hülse 38 an der zugehörigen Führungsbegrenzung befestigt. Mit ihrem unteren Ende stützen sich die beiden Schlitten 14, 15 an jeweils einer Feder 19, 20 ab. Das den Schlitten 14, 15 abgewandte Ende der Federn 19, 20 stützt sich an der zugehörigen Führungsbegrenzung 62 des Stützelementhaltekörpers 11 ab. Werden die beiden Schlitten 14, 15 nach unten bewegt, so werden die Federn 19, 20 zusammengedrückt. Auf die Schlitten 14, 15 wirkt eine entsprechende Federkraft.

Das erste Stützelement 9 ist an dem ersten Schlitten 14 angeordnet. Es ist ebenfalls als flaches Bauteil ausgebildet und liegt zumindest abschnittsweise auf dem ersten Schlitten 14 auf. Das erste Stützelement 9 weist einen Absatz 21 auf, mit dem es sich an dem ersten Schlitten 14 abstützt. Der Absatz 21 liegt auf der der Feder 19 abgewandten Stirnseite des ersten Schlittens 14 auf. An dem mit dem Absatz 21 ausgestatteten Ende des ersten Stützelements 9 befindet sich auch die erste Stützelementauflagefläche 22 des ersten Stützelements 9.

Das erste Stützelement 9 ist zusammen mit dem ersten Schlitten 14 entlang der ersten Führung 18 verschiebbar. Darüber hinaus ist das erste Stützelement 9 gegenüber dem ersten Schlitten 14 drehbar. Die Drehung erfolgt um eine Drehachse, die senkrecht zu der ersten Führung 12 ist. Die Drehachse wird durch eine Schraube 26 vorgegeben, die in einer Gewindebohrung 27 des abstützenden Körpers 11 gehalten ist. Der erste Schlitten 14 weist ein Langloch 29 auf, damit er relativ zu der Schraube 26 verschiebbar ist. Das erste Stützelement 9 weist ein Langloch 30 auf, damit es ebenfalls relativ zu der Schraube 26 verschiebbar ist. Darüber hinaus ist das erste Stützelement 9 relativ zu der Schraube 26 drehbar.

Die Schraube 26 hat noch ein zweite Funktion. Sie ist Teil der ersten Fixiereinrichtung 16. Diese weist ferner eine Blattfeder 31 auf, welche mit einem Ende an dem abstützenden Körper 11 mittels einer Schraube 32 und zwei Stiften 33, 34 fest eingespannt ist. Das andere Ende der Blattfeder 31 weist eine Durchgangsöffnung 35 auf, durch die die Schraube 26 hindurch geführt ist. Die Schraube 26 weist einen Schraubenkopf 36 und unmittelbar benachbart zu dem Schraubenkopf eine Feder 28 auf. Zum Einstellen der Position des ersten und zweiten Stützelements 9, 10 ist die Schraube 26 gelockert, so dass die Blattfeder 31 ausgelenkt werden kann. Zum Fixieren einer Position des ersten Stützelementes 9 wird die Schraube so weit in die Gewindebohrung 27 hinein gedreht, dass der Schraubenkopf 36 der Schraube 26 die Feder 28 zusammendrückt und die Blattfeder 31 gegen das erste Stützelement 9, den ersten Schlitten 14 und die erste Führung 12 des Stützelementhaltekörpers 11 drückt. Dadurch wird das erste Stützelement 9 mit dem Stützelementhaltekörper 11 verspannt.

Die Feder 19 ist über einen Stift 37 und eine auf den Stift 37 aufgesetzte Hülse 38 mit einem Hülsenkopf 39 an dem Stützelementhaltekörper 11 gehalten.

Das zweite Stützelement 10 weist eine zweite Stützelementauflagefläche 40 auf.

Das zweite Stützelement 10, die zweite Führung 13, der zweite Schlitten 15 und die zweite Fixiereinrichtung 17 sind genau gleich aufgebaut und weisen die gleichen Komponenten auf wie das erste Stützelement 9, die erste Führung 12, der erste Schlitten 14 und die erste Fixiereinrichtung 16. Die Vorrichtung ist diesbezüglich symmetrisch aufgebaut. Für die übereinstimmenden Komponenten werden in der Zeichnung zumindest teilweise die gleichen Bezugszahlen verwendet.

In Figur 6 ist die Vorrichtung 3 gemäß erstem Ausführungsbeispiel in einer Ansicht von vorne zusammen mit einem Werkstück 2 und einem Werkstückpresselement 44 dargestellt. Das Werkstückpresselement 44 übt eine Kraft auf das Werkstück 2 aus und drückt dieses gegen die Auflage, die durch das erste Stützelement 9 und das zweite Stützelement 10 gebildet wird. Dabei liegt das Werkstück 2 an der ersten Werkstückanlegefläche des ersten Stützelements 9 und an der zweiten Werkstückanlegefläche des zweiten Stützelements 10 an. Auf diese Weise wird das Werkstück 2 eingespannt. Die Kraft des Werkstückpresselements 44 wird zusammen mit der Gewichtskraft des Werkstücks 2 auf die beiden Stützelemente 9, 10 und die zugehörigen Schlitten 14, 15 übertragen. Um eine hohe Wiederholgenauigkeit der Position der Werkstücke zu garantieren, dürfen sich die Stützelemente 9, 10 und die zugehörigen Schlitten unter der Einwirkung der Kraft des Werkstückpresselements 44 und der Gewichtskraft eines Werkstücks 2 nicht bewegen.

Zur Einstellung des ersten und zweiten Stützelements 9, 10 und des ersten und zweiten Schlittens 14, 15 dient ein Referenz-Werkstück, welches im wesentlichen dem in der Zeichnung dargestellten Werkstück 2 entspricht. Die Stützelemente 9, 10 werden unter einem Winkel ausgerichtet, der der Position des Referenz-Werkstücks entspricht. Der erste und zweite Schlitten 14, 15 werden entsprechend nach unten bewegt. Die Federn 19, 20 werden zusammengedrückt. Die Federkraft dieser ausgelenkten Federn 19, 20 wirkt dem Referenz-Werkstück entgegen. Wenn sich die Kräfte gegenseitig aufheben, herrscht ein Kräftegleichgewicht. Die eingestellte Position des ersten Stützelements 9 und das zweiten Stützelements 10 wird mit den beiden Fixiereinrichtungen 16, 17 fixiert. Diese Einstellung der beiden Stützelemente 9, 10 und der Schlitten 14, 15 kann auch als Setup bezeichnet werden. Die Einstellung wird nur dann verändert, wenn andere Werkstücke mit unterschiedlicher Geometrie eingesetzt werden. Die fixierte Position der beiden Stützelemente 9, 10 wird für weitere Werkstücke genutzt, die anstelle des Referenz-Werkstücks auf die Spindel aufgesetzt werden.

Der Winkel zwischen der ersten Führung 12 und der zweiten Führung 13 beträgt bei dem ersten Ausführungsbeispiel 90°. Der Winkel der ersten Führung 12 gegen die Horizontale beträgt 45°. Der Winkel der zweiten Führung 13 gegen die Horizontale beträgt 45°. Die Vorrichtung 3 ist im wesentlichen spiegelsymmetrisch zu einer vertikalen Symmetrieebene aufgebaut.

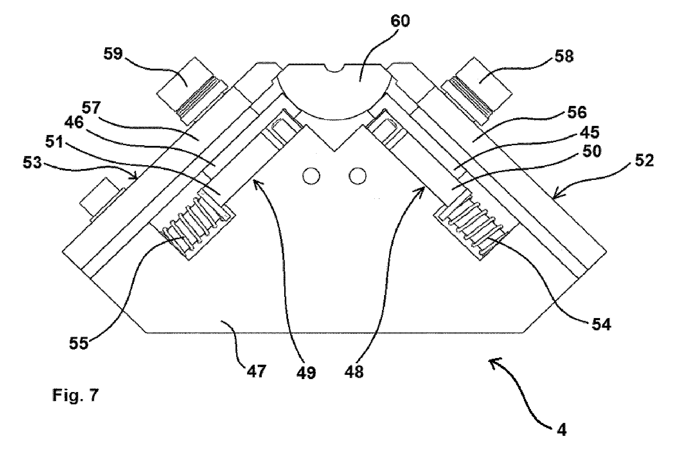

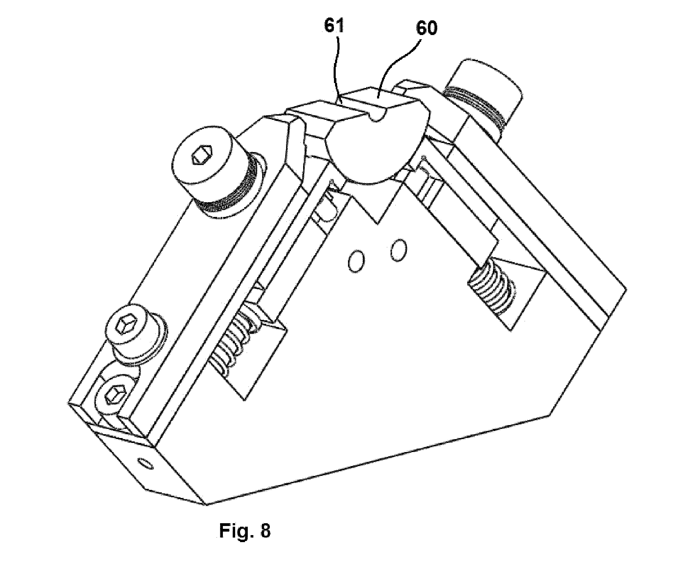

In den Figuren 7 und 8 ist ein zweites Ausführungsbeispiel einer Vorrichtung 4 zur Werkstückzentrierung dargestellt. Es handelt sich hierbei um ein Ausführungsbeispiel, das der zweiten und dritten Vorrichtung in Figur 1 entspricht.

Der Aufbau ist im wesentlichen identisch wie beim ersten Ausführungsbeispiel. Die Vorrichtung weist ebenfalls ein erstes Stützelement 45, ein zweites Stützelement 46, einen die beiden Stützelemente 45, 46 abstützenden Stützelementhaltekörper 47 mit einer ersten als schiefe Ebene ausgebildeten Führung und einer zweiten als schiefe ebene ausgebildeten Führung, einem ersten Schlitten 50, einem zweiten Schlitten 51, einer ersten Fixiereinrichtung 52 und einer zweiten Fixiereinrichtung 53 auf. Der Stützelementhaltekörper 47 weist ebenfalls eine im wesentlichen dreieckige Form auf. Die Schlittenführung mit Federn 54, 55 und die Fixiereinrichtung mit Blattfedern 56, 57 und Schrauben 58, 59 ist im wesentlichen entsprechend zu dem ersten Ausführungsbeispiel gemäß Figuren 2 bis 6 aufgebaut. Es bestehen zwei prinzipielle Unterschiede zu dem ersten Ausführungsbeispiel:

Es ist ein Werkstückaufnahmeteil 60 mit einer zylindrischen Vertiefung 61 für ein Werkstück vorgesehen. Die Vertiefung 61 ist als längliche Mulde ausgebildet. Sie reicht von einer Stirnseite des Werkstückaufnahmeteils bis zur anderen Stirnseite. Das Werkstückaufnahmeteil 60 weist im wesentlichen die Form einen halben Kreiszylinders auf. Die nach unten weisende Oberfläche ist rund. An den Seiten ist das Werkstückaufnahmeteil abgeschrägt. Das Werkstückaufnahmeteil liegt auf dem ersten Stützelement 45 und dem zweiten Stützelement 46 auf.

Der zweite Unterschied zu dem ersten Ausführungsbeispiel besteht darin, dass die Blattfedern 56, 57 der Fixiereinrichtungen 52, 53 an ihrem dem fest eingespannten Ende abgewandten Ende spitz zulaufen und bis zu dem Werkstückaufnahmeteil 60 reichen. Da das Werkstückaufnahmeteil 60 an den den spitz zulaufenden Enden der Blattfedern 56, 57 zugewandten Seiten abgeflacht ist und die Blattfedern bis zu den abgeflachten Seiten reichen, kann mit den Blattfedern nicht nur die Position der Stützelemente 45, 46 fixiert werden sondern auch die Position des Werkstückaufnahmeteils 60. Die Blattfedern drücken von beiden Seiten gegen das Werkstückaufnahmeteil 60.

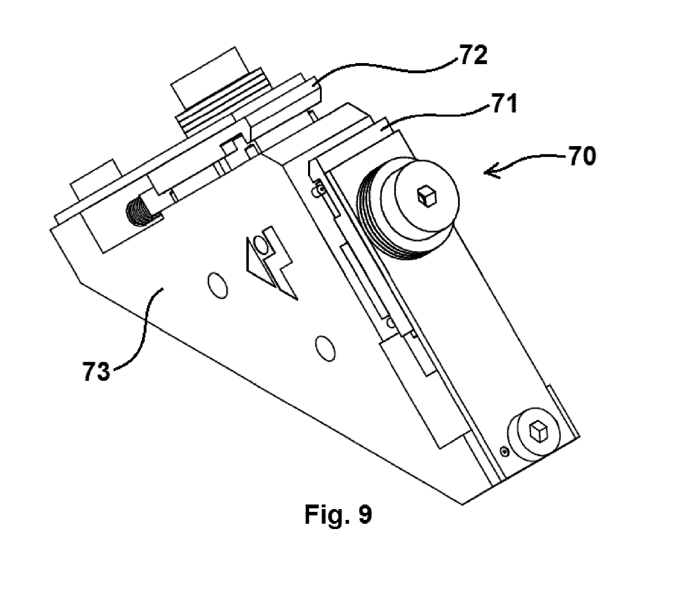

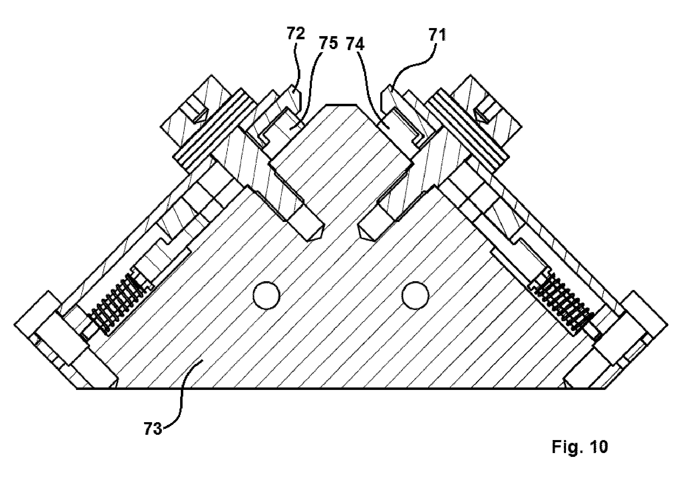

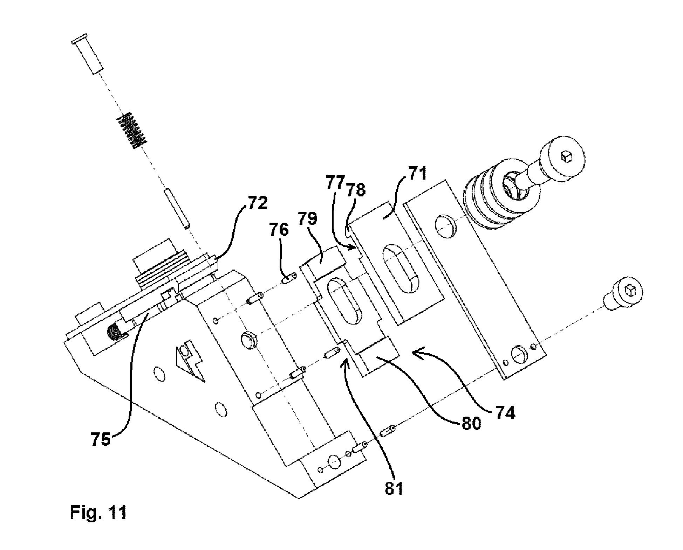

In den Figuren 9 bis 11 ist ein drittes Ausführungsbeispiel einer Vorrichtung 70 zur Werkstückzentrierung dargestellt. Sie unterscheidet sich von dem ersten Ausführungsbeispiel in der Form des ersten Stützelements 71, des zweiten Stützelements 72, des Stützelementhaltekörpers 73, des ersten Schlittens 74, des zweiten Schlittens 75 und der Position der Führungsstifte 76 zur Führung der Translationsbewegung des ersten und zweiten Schlittens 74, 75. Alle übrigen Komponenten stimmen mit dem ersten Ausführungsbeispiel überein, weshalb diese in der Zeichnung nicht mit Bezugszahlen versehen und im folgenden nicht ausführlich erläutert sind. Hierzu wird auf die Zeichnungsbeschreibung zu den Figuren 2 bis 6 verwiesen. Das erste Stützelement 71 weist an der dem ersten Schlitten 74 zugewandten Seite eine zusätzliche Vertiefung 77 auf. Sie schließt sich unmittelbar an den Absatz 78 an, mit dem sich das erste Stützelement 71 an dem ersten Schlitten 74 abstützt. Der erste Schlitten 74 weist im Unterschied zu dem ersten Schlitten des ersten Ausführungsbeispiel an der dem ersten Stützelement 71 zugewandten Seite zwei Absätze 79, 80 auf, die in Richtung des ersten Stützelements 71 vorstehen. Im zusammengefügten Zustand liegt das erste Stützelement 71 auf dem ersten Schlitten 74 auf. Der erste Absatz 79 des ersten Schlittens 74 ist dann in der Vertiefung angeordnet. Die Ausdehnung des ersten Absatzes 79 in Längsrichtung des ersten Schlittens 74 ist kleiner als die Ausdehnung der Vertiefung in Längsrichtung des Schlittens 74 oder des ersten Stützelements 71. Zwischen dem ersten Absatz 79 und der Vertiefung besteht ausreichend Spiel, so dass die Rotation des ersten Stützelements 71 und dem ersten Schlitten 74 nicht behindert wird. Der zweite Absatz 80 des ersten Schlittens 74 schließt sich an die dem Absatz 78 angewandte Stirnseite des ersten Stützelements 71 an.

Der Stützelementhaltekörper 73 ist im Unterschied zum ersten Ausführungsbeispiel an der oberen Seite abgeflacht und an seiner unteren Seite durchgängig ohne Einschnitt. In Übereinstimmung mit dem ersten Ausführungsbeispiel weist der Stützelementhaltekörper 73 eine im wesentlichen dreieckige Form auf.

Im Unterschied zu dem ersten Ausführungsbeispiel sind bei dem dritten Ausführungsbeispiel vier Führungsstifte 76 zur Führung der Translationsbewegung des ersten Schlittens 74 vorgesehen. Die Position der Führungsstifte beeinflusst auch die Form des ersten Schlittens. An den Seiten des ersten Schlittens 74 sind Einschnitte 81 für die Führungsstifte vorgesehen. Sie sorgen für eine Führung entlang der Führungsstifte 76 bei einer Translationsbewegung des ersten Schlittens 74 und begrenzen den Verschiebeweg.

Das zweite Stützelement 72, der zweite Schlitten 75 und die zugehörigen Führungsstifte sind bei dem dritten Ausführungsbeispiel entsprechend zu dem ersten Stützelement 71, dem ersten Schlitten 74 und den zugehörigen Führungsstiften ausgebildet.

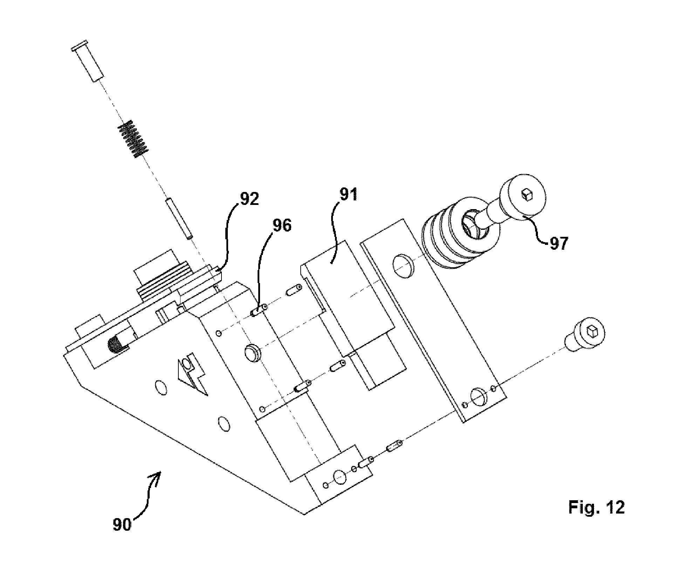

In Figur 12 ist ein viertes Ausführungsbeispiel einer Vorrichtung 90 zur Werkstückzentrierung dargestellt. Diese Vorrichtung stimmt im wesentlichen mit der Vorrichtung 70 des dritten Ausführungsbeispiels überein. Der einzige Unterschied besteht darin, dass bei dem dritten Ausführungsbeispiel das erste Stützelement 71 und der erste Schlitten 74 zwei separate Bauteile sind. Bei der Vorrichtung 90 des vierten Ausführungsbeispiels bilden das erste Stützelement 91 und der erste Schlitten ein einteiliges Bauteil. Der Schlitten ist somit Teil des ersten Stützelements 91. In diesem Fall führt das erste Stützelement 91 sowohl eine Translationsbewegung entlang der Führungsstifte 96 als auch eine Rotationsbewegung um die Schraube 97 aus. Damit die Rotationsbewegung nicht durch die Führungsstifte 96 beeinträchtigt wird, muss zwischen dem ersten Stützelement 91 und den Führungsstiften 96 ausreichend Spiel vorhanden sein. Für das zweite Stützelement 92 gilt entsprechendes. Es ist ebenfalls einteilig mit einem Schlitten ausgebildet.

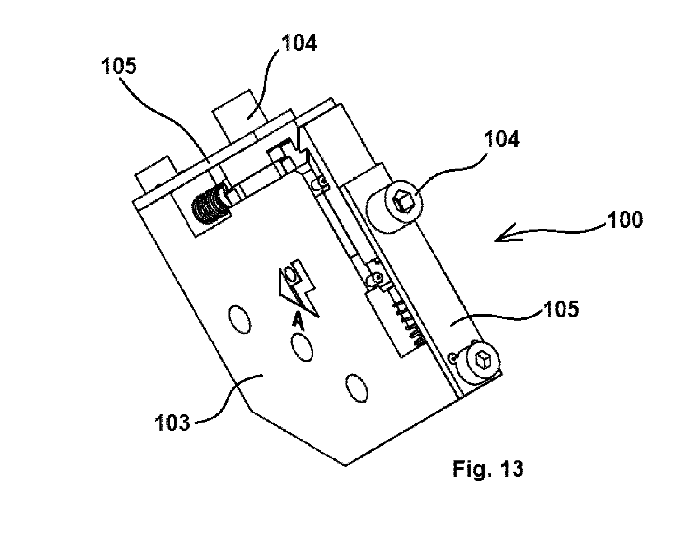

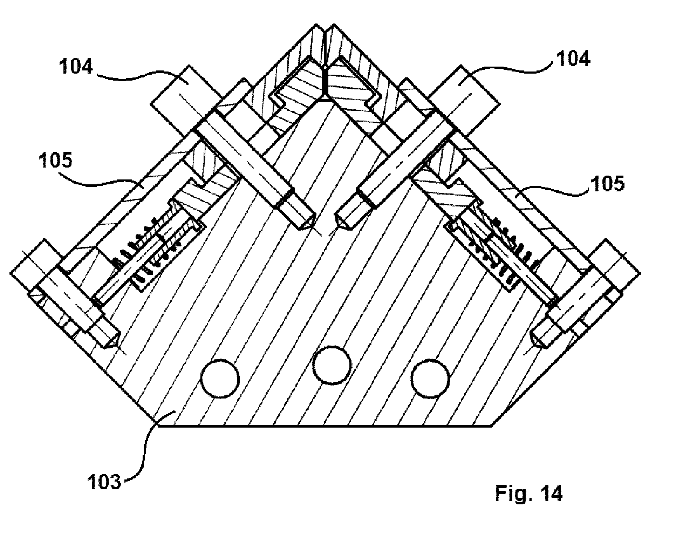

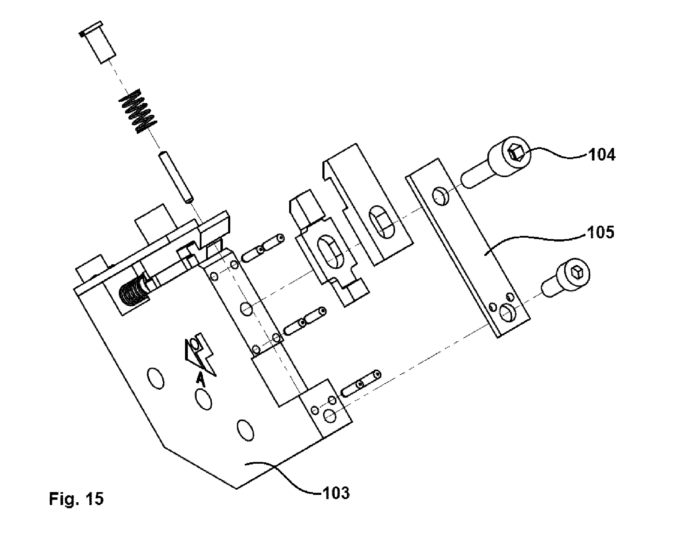

In den Figuren 13 bis 15 ist ein fünftes Ausführungsbeispiel einer Vorrichtung 100 zur Werkstückzentrierung dargestellt. Sie entspricht im wesentlichen der Vorrichtung 70 des dritten Ausführungsbeispiels. Von dieser Vorrichtung 70 unterscheidet sich die Vorrichtung 100 in der Form des Stützelementhaltekörpers 103. Dieser weist eine im wesentlichen rechteckige Form mit einer Abschrägung an einer der Ecken auf. Ein weiterer Unterschied zu dem ersten und dritten Ausführungsbeispiel besteht darin, dass sich der Kopf der Schrauben 104 direkt an der Blattfeder 105 der Fixiereinrichtung abstützt und nicht über eine Feder.

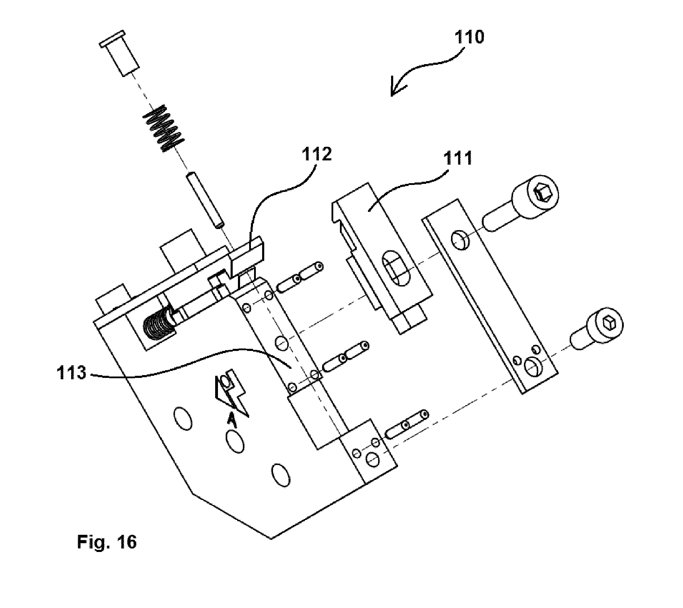

In Figur 16 ist ein sechstes Ausführungsbeispiel einer Vorrichtung 110 zur Werkstückzentrierung dargestellt. Sie entspricht der Vorrichtung 100 des fünften Ausführungsbeispiels mit der Ausnahme, dass das erste und zweite Stützelement 111 und 112 abschnittsweise als Schlitten ausgebildet sind, der auf den als schiefe Ebenen ausgebildeten Führungen 113 gleitet. In der Zeichnung ist nur die dem ersten Stützelement 111 zugeordnete Führung 113 erkennbar. Die dem zweiten Stützelement 112 zugeordnete Führung ist entsprechend ausgebildet. Während bei dem fünften Ausführungsbeispiel das erste Stützelement und der erste Schlitten zwei separate Bauteile sind, bilden bei dem sechsten Ausführungsbeispiel das erste Stützelement 111 und der erste Schlitten ein Bauteil. Entsprechendes gilt für das zweite Stützelement und 112.

Sämtliche Merkmale der Erfindung können sowohl einzeln als auch in beliebiger Kombination miteinander erfindungswesentlich sein.

### Bezugszahlen

- 1: Spindel
- 2: Werkstück
- 3: erste Vorrichtung zur Werkstückzentrierung
- 4: zweite Vorrichtung zur Werkstückzentrierung
- 5: dritte Vorrichtung zur Werkstückzentrierung
- 6: Spanneinrichtung
- 7: Bewegungsachse
- 8: Rotationsachse der Spindel
- 9: erstes Stützelement
- 10: zweites Stützelement
- 11: Stützelementhaltekörper
- 12: erste Führung
- 13: zweite Führung
- 14: erster Schlitten
- 15: zweiter Schlitten
- 16: erste Fixiereinrichtung
- 17: zweite Fixiereinrichtung
- 18: Führungsstift
- 19: Feder
- 20: Feder
- 21: Absatz
- 22: erste Werkstückanlegefläche
- 23:
- 24:
- 25:
- 26: Schraube
- 27: Gewindebohrung
- 28: Feder
- 29: Langloch
- 30: Langloch
- 31: Blattfeder
- 32: Schraube
- 33: Stift
- 34: Stift
- 35: Durchgangsöffnung
- 36: Schraubenkopf
- 37: Stift
- 38: Hülse
- 39: Hülsenkopf
- 40: zweite Werkstückanlegefläche
- 41:
- 42:
- 43:
- 44: Werkstückpresselement
- 45: erstes Stützelement
- 46: zweites Stützelement
- 47: Stützelementhaltekörper
- 48:
- 49:
- 50: erster Schlitten
- 51: zweiter Schlitten
- 52: erste Fixiereinrichtung
- 53: zweite Fixiereinrichtung
- 54: Feder
- 55: Feder
- 56: Blattfeder
- 57: Blattfeder
- 58: Schraube
- 59: Schraube
- 60: Werkstückaufnahmeteil
- 61: Vertiefung
- 62: Führungsbegrenzung
- 70: Vorrichtung zur Werkstückbegrenzung
- 71: erstes Stützelement
- 72: zweites Stützelement
- 73: Stützelementhaltekörper
- 74: erster Schlitten
- 75: zweiter Schlitten
- 76: Führungsstift
- 77: Vertiefung
- 78: Absatz
- 79: Absatz
- 80: Absatz
- 90: Vorrichtung zur Werkstückzentrierung
- 91: erstes Stützelement
- 92: zweites Stützelement
- 96: Führungsstift
- 97: Schraube
- 100: Vorrichtung zur Werkstückzentrierung
- 103: Stützelementhaltekörper
- 104: Schraube
- 105: Blattfeder
- 110: Vorrichtung zur Werkstückzentrierung
- 111: erstes Stützelement
- 112: zweites Stützelement
- 113: Führung

## Patentansprüche

1. Vorrichtung zur Werkstückzentrierung eines an einer Spindel (1) fixierten länglichen Werkstücks (2)
mit einem ersten Stützelement (9, 45, 71, 91, 111), welches das Werkstück (2) oder ein das Werkstück (2) aufnehmendes Werkstückaufnahmeteil (60) abstützt,
mit einem zweiten Stützelement (10, 46, 72, 92, 112), welches das Werkstück (2) oder ein das Werkstück (2) aufnehmendes Werkstückaufnahmeteil (60) abstützt,
wobei das erste Stützelement (9, 45, 71, 91, 111) und das zweite Stützelement (10, 46, 72, 92, 112) gemeinsam eine Abstützung für das Werkstück (2) oder ein das Werkstück (2) aufnehmendes Werkstückaufnahmeteil (60) bilden,
mit einem das erste Stützelement (9, 45, 71, 91, 111) und das zweite Stützelement (10, 46, 72, 92, 112) abstützenden Stützelementhaltekörper (11, 47, 73, 103),
wobei das erste Stützelement (9, 45, 71, 91, 111) und das zweite Stützelement (10, 46, 72, 92, 112) verschiebbar und drehbar an dem Stützelementhaltekörper (11, 47, 73, 103) angeordnet sind.

2. Vorrichtung nach Anspruch 1, **dadurch gekennzeichnet, dass** das erste Stützelement (9, 45) eine im wesentlichen ebene erste Werkstückanlegefläche (22) aufweist, dass zweite Stützelement (10, 46) eine im wesentlichen ebene zweite Werkstückanlegefläche (40) aufweist, und dass der Winkel zwischen der ersten Werkstückanlegefläche (22) und der zweiten Werkstückanlegefläche (40) größer als 0° und kleiner als 180° ist.

3. Vorrichtung nach Anspruch 1 oder 2, **dadurch gekennzeichnet, dass** der Stützelementhaltekörper (11, 47, 73, 103) entlang einer Bewegungsachse (7) verschiebbar angeordnet ist.

4. Vorrichtung nach Anspruch 1, 2 oder 3, **dadurch gekennzeichnet, dass** der Stützelementhaltekörper (11, 47, 73, 103) eine erste Führung (12, 113) aufweist, an der das erste Stützelement (9, 45, 71, 91, 111) in eine erste Richtung verschiebbar ist.

5. Vorrichtung nach einem der vorhergehenden Ansprüche, **dadurch gekennzeichnet, dass** der Stützelementhaltekörper (11, 47, 73, 103) eine zweite Führung (13) aufweist, an der das zweite Stützelement (10, 46, 72, 92, 112) in eine zweite Richtung verschiebbar ist.

6. Vorrichtung nach einem der vorhergehenden Ansprüche, **dadurch gekennzeichnet, dass** das erste Stützelement (9, 45, 71, 91, 111) um eine erste Drehachse drehbar ist, die im wesentlichen senkrecht zu einer ersten Richtung, in die das erste Stützelement (9, 45, 71, 91, 111) verschiebbar ist, ausgerichtet ist.

7. Vorrichtung nach einem der vorhergehenden Ansprüche, **dadurch gekennzeichnet, dass** das zweite Stützelement (10, 46, 72, 92, 112) um eine zweite Drehachse drehbar ist, die im wesentlichen senkrecht zu einer zweiten Richtung, in die das zweite Stützelement (10, 46, 72, 92, 112) verschiebbar ist, ausgerichtet ist.

8. Vorrichtung nach Anspruch 4, **dadurch gekennzeichnet, dass** ein erster Schlitten (14, 50, 74) vorgesehen ist, der an der ersten Führung (12) verschiebbar angeordnet ist, und dass das erste Stützelement (9, 45, 71) gegenüber dem ersten Schlitten (14, 50, 74) um eine erste Drehachse drehbar ist.

9. Vorrichtung nach Anspruch 5, **dadurch gekennzeichnet, dass** ein zweiter Schlitten (15, 51, 75) vorgesehen ist, der an der zweiten Führung (13) verschiebbar angeordnet ist, und dass das zweite Stützelement (10, 46, 72) gegenüber dem zweiten Schlitten (15, 51, 75) um eine zweite Drehachse drehbar ist.

10. Vorrichtung nach Anspruch 8 oder 9, **dadurch gekennzeichnet, dass** mindestens eines der beiden Stützelemente (9, 10, 71, 72) einen Absatz (21, 78) aufweist, mit dem es sich an dem ihm zugeordneten Schlitten (14, 15, 74, 75) abstützt.

11. Vorrichtung nach einem der Ansprüche 4 bis 10, **dadurch gekennzeichnet, dass** mindestens eine der beiden Führungen (12, 13, 113) an einem Ende mit einer Führungsbegrenzung (62) ausgestattet ist, dass an der Führungsbegrenzung (62) eine Feder (19, 20, 54, 55) angeordnet ist, und dass sich der an der Führung (12, 13, 48, 49, 113) angeordnete Schlitten (14, 15, 50, 51, 74, 75) an der Feder (19, 20, 54, 55) abstützt.

12. Vorrichtung nach einem der vorhergehenden Ansprüche, **dadurch gekennzeichnet, dass** der Stützelementhaltekörper (11, 47, 73, 103) mit mindestens einer Fixiereinrichtung (16, 17, 52, 53) ausgestattet ist, mit der mindestens eines der beiden Stützelemente (9, 10, 45, 46, 71, 72, 91, 92, 111, 112) an dem Stützelementhaltekörper (11, 47, 73, 103) in einer Position fixierbar ist.

13. Vorrichtung nach Anspruch 12, **dadurch gekennzeichnet, dass** die Fixiereinrichtung (16, 17) eine Klemmeinrichtung ist, welche das Stützelement (9, 10, 45, 46, 71, 72, 91, 92, 111, 112) in der fixierten Stellung gegen den Stützelementhaltekörper (11, 47, 73, 103) drückt.

14. Vorrichtung nach einem der vorhergehenden Ansprüche, **dadurch gekennzeichnet, dass** sie mit einem Werkstückaufnahmeteil (60) ausgestattet ist, welches an dem ersten und zweiten Stützelement (45, 46) anliegt, und dass das Werkstückaufnahmeteil (60) eine Vertiefung (61) für das Werkstück (2) aufweist.

15. Vorrichtung nach Anspruch 12 oder 13 und nach Anspruch 14, **dadurch gekennzeichnet, dass** die Fixiereinrichtung (52, 53) einen das Werkstückaufnahmeteil (60) gegen das erste und/ oder zweite Stützelement (45, 46) drückenden Abschnitt aufweist.

16. Vorrichtung nach einem der vorhergehenden Ansprüche, **dadurch gekennzeichnet, dass** sie ein Werkstückpresselement (44) aufweist, welches auf ein an dem ersten und zweiten Stützelement (9, 10, 45, 46) anliegendes Werkstück (2) eine Kraft ausübt und das Werkstück (2) einspannt.
